# EUROPÄISCHE PATENTSCHRIFT

(11) **EP 1 987 325 B1**
(45) Veröffentlichungstag und Bekanntmachung des Hinweises auf die Patenterteilung: **31.12.2014**
(21) Anmeldenummer: 07726396.0
(22) Anmeldetag: 16.02.2007
(51) Int. Cl.: G01D 11/28

(54) **OPTISCHE ANORDNUNG UND ZEIGERINSTRUMENT MIT EINER SOLCHEN ANORDNUNG**
OPTICAL ARRANGEMENT AND POINTER INSTRUMENT WITH SUCH AN ARRANGEMENT
ARRANGEMENT OPTIQUE ET INSTRUMENT A AIGUILLE COMPRENANT UN TEL ARRANGEMENT

(30) Priorität: 17.02.2006 DE 102006007491
(43) Veröffentlichungstag der Anmeldung: 05.11.2008
(73) Patentinhaber: Continental Automotive GmbH, 30165 Hannover (DE)
(72) Erfinder: FÖRSTER, Axel, 68199 Mannheim (DE)
(86) Internationale Anmeldenummer: PCT/EP2007/051507
(87) Internationale Veröffentlichungsnummer: WO 2007/093634

(56) Entgegenhaltungen:
- EP-A1- 0 498 451
- DE-C- 746 160
- US-A- 4 380 043

## Beschreibung

Die Erfindung betrifft eine optische Anordnung, insbesondere zur passiven Beleuchtung eines Zeigers eines Zeigerinstruments, bestehend aus einem ringförmigen Lichtleitelement, dessen erste Stirnseite mindestens eine Einkoppelfläche und dessen zweite Stirnseite mindestens eine Auskoppelfläche aufweist, sowie mindestens einer Lichtquelle, deren Licht in die mindestens eine Einkoppelfläche einleitbar ist, während das aus der Auskoppelfläche austretende Licht der Beleuchtung des Zeigers dient. Weiterhin betrifft die Erfindung ein Zeigerinstrument, insbesondere für ein Kraftfahrzeug, mit einem um eine Drehachse drehbaren Trägerkörper, an dem ein in einer Anzeige sichtbarer Zeiger vorgesehen ist, der außerhalb der Drehachse gelagert ist.

Optische Anordnungen der eingangs genannten Gattung gehören seit Jahren zum Stand der Technik. Wenn jedoch bei einer derartigen Anordnung ein glasklares Lichtleitelement verwendet wird, sind in den Bereichen, die den als Lichtquellen dienenden Leuchtdioden direkt gegenüber liegen, Helligkeitsmaxima zu beobachten, während in den Bereichen, die zwischen den Lichtquellen liegen, die Helligkeit im Zeiger deutlich abnimmt. Um diesen Effekt zu verringern, wurden Versuche mit einem diffusen Lichtleitmaterial unternommen. Die erzielten Ergebnisse erfüllen jedoch nicht im ausreichenden Maß die von Benutzern gestellten Anforderungen. Ein zweiter Nachteil der Verwendung der diffusen Lichtleitmaterialien besteht darin, dass die Helligkeit im Zeiger, verglichen mit glasklarem Material, generell sinkt. Um eine gleichmäßige Helligkeit des Zeigers über den gesamten Anzeigewinkel zu gewährleisten, muss in dem Bereich, der das Licht aus dem Lichtleitelement auskoppelt, eine gleichmäßige Leuchtdichte erreicht werden.

Die EP 0 498 451 A1 und die DE 746 160 C beschreiben jeweils ein Zeigeinstrument mit einem teilringförmigen Lichtleitelement, wobei an den Enden des Teilrings Licht in den lichtleitenden Ring eingekoppelt wird und in Richtung eines Betrachters ausgekoppelt wird.

Die US 4,380,043 A beschreibt ein Zeigeinstrument mit einem plattenförmigen Beleuchtungskörper, in den über einen Lichtleiter Licht einer Lichtquelle eingekoppelt wird und in Richtung eines Betrachters ausgekoppelt wird.

Es ist daher Aufgabe der vorliegenden Erfindung, eine optische Anordnung der eingangs genannten Gattung dahingehend zu verbessern, dass durch die Verwendung von einfachen, kostengünstig zu realisierenden Maßnahmen an jeder Stelle des Anzeigebereichs eine weitgehend gleichmäßige Helligkeit des Zeigers erreicht wird.

Diese Aufgabe wird erfindungsgemäß dadurch gelöst, dass das Lichtleitelement mehrere Ein- sowie Auskoppelflächen aufweist, wobei die Auskoppelflächen derart ausgebildet sind, dass sie lediglich Lichtstrahlen durchlassen, deren Abstrahlwinkel zur Senkrechten unterhalb eines Grenzwertes liegt, während Lichtstrahlen, deren Abstrahlwinkel zur Senkrechten oberhalb des Grenzwertes liegt, einer Totalreflexion unterworfen werden. Durch diese Maßnahmen wird erreicht, dass das Licht, das unter einem zu "flachen" Winkel austreten würde, wieder in das Lichtleitelement zurück reflektiert und so lange umgelenkt wird, bis der Austrittswinkel ausreichend "steil" ist, so dass die Struktur das Licht austreten lässt. Dabei wird der diffuse Anteil im Lichtleitelement auf ein Minimum reduziert.

Bei einer vorteilhaften Weiterbildung des Erfindungsgegenstandes beträgt der Grenzwert des Abstrahlwinkels ca. 30°.

Eine kostengünstig herstellbare Ausführung der Erfindung besteht darin, dass die Auskoppelflächen nach dem Prinzip einer "Solf-Struktur" ausgebildet sind. Die Auskoppelflächen sind dabei vorzugsweise am Bund des Lichtleitelementes ausgebildet und durch parallele oder nahezu parallel zueinander verlaufende radiale Riefen gebildet, die beispielsweise durch einen einfachen Einfräsvorgang hergestellt werden können.

Eine andere vorteilhafte Weiterbildung des Erfindungsgegenstandes sieht vor, dass die Auskoppelflächen durch Bereiche mit einer "aufgerauten" Oberfläche voneinander getrennt sind. Die Einkoppelflächen können mit Vorteil durch in axialer Richtung des Lichtleitelementes ausgeführte Aussparungen gebildet, vorzugsweise als Zerstreuungslinsen ausgeführt sein.

Besondere Eignung weist die erfindungsgemäße Anordnung in Verbindung mit als Leuchtdioden ausgebildeten Lichtquellen auf, da diese aufgrund ihrer geringen Wärmeentwicklung auch unproblematisch nahe an den Einkoppelflächen angeordnet werden können.

Ein Zeigerinstrument gemäß der vorliegenden Erfindung zeichnet sich schließlich dadurch aus, dass der Zeiger und/oder der Trägerkörper lichtleitend ausgebildet ist und eine Einkoppelfläche aufweist, in die das aus einem Lichtleitelement austretende. Licht einleitbar ist, wobei das Lichtleitelement mehrere Ein- sowie Auskoppelflächen aufweist, und wobei die Auskoppelflächen derart ausgebildet sind, dass sie lediglich Lichtstrahlen durchlassen, deren Abstrahlwinkel zur Senkrechten unterhalb eines Grenzwertes liegt, während Lichtstrahlen, deren Abstrahlwinkel zur Senkrechten oberhalb des Grenzwertes liegt, einer Totalreflexion unterworfen werden.

Die Erfindung wird im nachfolgenden Text im Zusammenhang mit den beiliegenden Zeichnungen an einem Ausführungsbeispiel näher erläutert. In den Zeichnungen zeigen:
- Fig. 1: eine vereinfachte dreidimensionale Darstellung einer Ausführung der optischen Anordnung gemäß der vorliegenden Erfindung; und
- Fig. 2: einen Querschnitt durch eine Seite der wesentlichen Bauteile eines erfindungsgemäßen Zeigerinstruments.

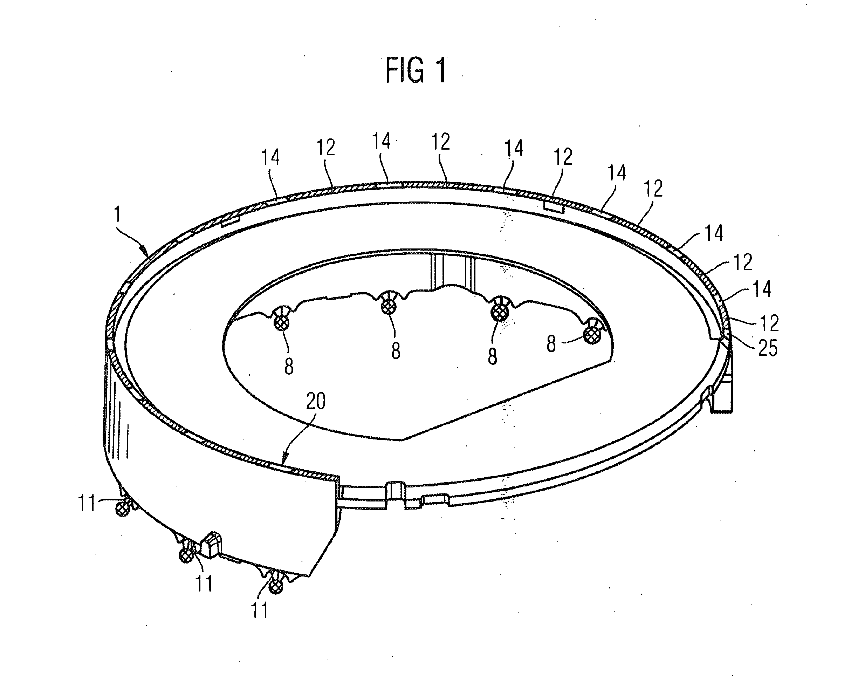

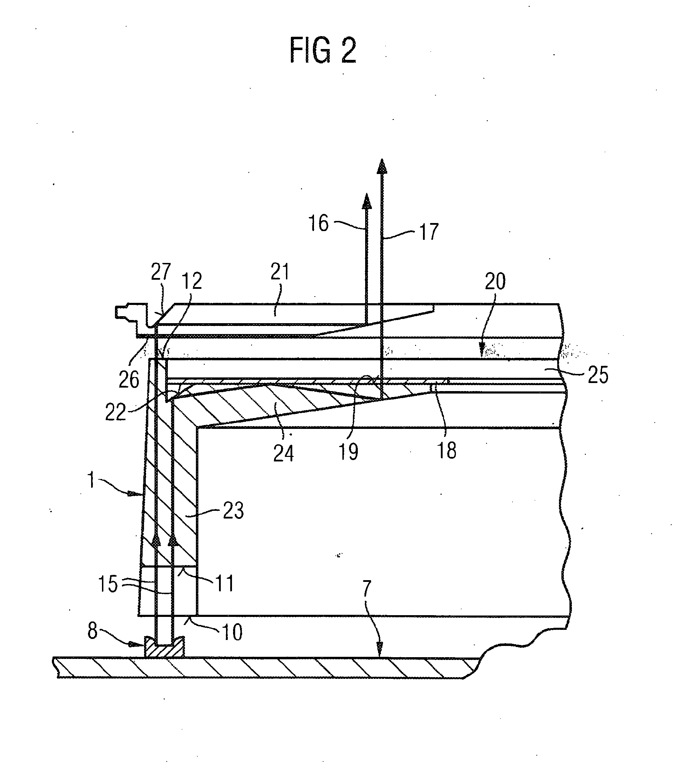

Die in Fig. 1 dargestellte erfindungsgemäße optische Anordnung, die der passiven Beleuchtung eines Zeigers eines Zeigerinstruments (s. Fig. 2) dient, besteht im Wesentlichen aus einem ringförmigen Lichtleitelement 1 sowie als Leuchtdioden 8 ausgebildeten Lichtquellen, die auf einer nicht gezeigten Leiterplatte befestigt und elektrisch kontaktiert sind.

Das Lichtleitelement 1 ist im Wesentlichen als zylindrischer bzw. kreissegmentförmiger Ring ausgebildet. Eine erste Stirnfläche 10 weist mehrere, durch in axialer Richtung des Ringes ausgeführte Aussparungen gebildete Einkoppelflächen 11 auf, in die die in im Wesentlichen äquidistanten Abständen zueinander, der Ringform folgend, angeordnete Leuchtdioden 8 einstrahlen. Dabei ist es besonders vorteilhaft, wenn die Einkoppelflächen 11 als Zerstreuungslinsen ausgeführt sind. Für eine homogene Ausleuchtung in Umfangsrichtung der Ringform über einen Winkelbereich von etwa 270° sind insgesamt zwölf Leuchtdioden 8 vorgesehen. Weiterhin weist das Lichtleitelement 1 eine auf einem der ernsten Stirnseite 10 gegenüber liegenden Bund 25 ausgebildete zweite Stirnseite 20 auf, auf der, den Einkoppelflächen 11 gegenüber liegend, Auskoppelflächen 12 ausgebildet und mittels Bereiche 14 voneinander getrennt sind. Die Bereiche 14 sind im gezeigten Beispiel durch axiale Ausnehmungen gebildet, deren Böden aufgeraut sind. Die Auskoppelflächen 12 sind vorzugsweise nach dem Prinzip einer so genannten radialen Solf-Struktur als auf den Mittelpunkt des Lichtleiters zulaufende Riefen ausgeführt, die daher nahezu parallel zueinander verlaufen, so dass Lichtstrahlen, deren Abstrahlwinkel unterhalb eines vorgegebenen Wertes, beispielsweise max. 30°, zur Senkrechten liegen und demnach als "steil" bezeichnet werden können, ausgekoppelt werden. Demgegenüber werden Lichtstrahlen, deren Abstrahlwinkel oberhalb des oben erwähnten vorgegebenen Wertes zur Senkrechten liegen und demnach als "flach" bezeichnet werden können, einer Totalreflexion unterworfen und somit wieder in das Lichtleitelement 1 zurück reflektiert. Da der diffuse Anteil des Lichts entfällt bzw. auf ein Minimum reduziert wird, wird durch die beschriebene Anordnung eine nahezu gleichmäßige Leuchtdichte auf dem Bund 25 erreicht.

Die im Zusammenhang mit Fig. 1 erwähnten Bauelemente der erfindungsgemäßen optischen Anordnung sind in der Schnittdarstellung gemäß der Figur 2 mit den gleichen Bezugszeichen versehen. Das Lichtleitelement 1 ist in einem nicht gezeigten Trägerkörper angeordnet und weist außer den im Zusammenhang mit Fig. 1 erwähnten Auskoppelflächen 12 eine weitere Auskoppelfläche 19 auf. Das Licht 15 der auf einer Leiterplatte 7 angeordneten Leuchtdiode 8 wird im Lichtleitelement 1 in zwei Teilstrahlen 16, 17 aufgeteilt, wobei ein erster Teilstrahl 16, der über die Auskoppelfläche 12 ausgekoppelt wird, der Beleuchtung eines Zeigers 21 dient, während ein zweiter Teilstrahl 17 zur Hinterleuchtung eines lediglich angedeuteten Zifferblatts 18 verwendet wird. Der Zeiger 21 und/oder der Trägerkörper sind lichtleitend ausgebildet. Das Zifferblatt 18 ist mit einer nicht im Einzelnen dargestellten Skala versehen, an der der Zeiger 21 im Betrieb nicht im Einzelnen dargestellte Messwerte anzeigt. Zur Aufteilung des Lichts 15 in die beiden Teilstrahlen 16, 17 weist das Lichtleitelement 1 eine Reflexionsfläche 22 auf, an der der zweite Teilstrahl 17 des Lichts 15 vom ersten Teilstrahl 16 trennend gespiegelt wird.

Weiterhin ist der Fig. 2 zu entnehmen, dass das Lichtleitelement 1 aus zwei Abschnitten, einem zylindrischen, die Ein-(11) sowie die Auskoppelflächen 12 aufweisenden ersten Abschnitt 23, sowie einem im Wesentlichen radial verlaufenden zweiten Abschnitt 24 besteht, in dem die vorhin erwähnte weitere Auskoppelfläche 19 ausgebildet ist. Da der erste Teilstrahl 16 unter einem "steilen" Abstrahlwinkel verläuft, wird er in im Wesentlichen gerader Verlängerung zu einer Einkoppelfläche 26 des Zeigers 21 geleitet. Der in den Zeiger 21 eintretende Teilstrahl 16 wird an einer Grenzfläche 27 in Erstreckungsrichtung des Zeigers 21 reflektiert, bis die sich verjüngende Zeigerform ebenfalls mittels einer Grenzfläche den Teilstrahl 16 in Richtung eines nicht dargestellten Betrachters spiegelt. Der zweite Abschnitt 24 lenkt den zweiten Teilstrahl 17 zur Beleuchtung des Zifferblatts 18 und zusätzlichen Beleuchtung des Zeigers 21 radial nach innen um. Um eine möglichst homogene Ausleuchtung des Zifferblatts 18 in radialer Richtung zu erreichen, ist vorgesehen, dass sich der zweite Abschnitt 24 bezüglich seiner Materialstärke mit zunehmendem Abstand vom ersten Abschnitt 23 in radialer Richtung verjüngt.

Durch die oben beschriebenen Maßnahmen wird erreicht, dass an jeder Stelle des Anzeigebereichs eine gleich bleibende Helligkeit des Zeigers 21 gewährleistet wird.

## Patentansprüche

1. Optische Anordnung, insbesondere zur passiven Beleuchtung eines Zeigers (21) eines Zeigerinstruments, bestehend aus einem ringförmigen Lichtleitelement (1), dessen erste Stirnseite (10) mindestens eine Einkoppelfläche (11) und dessen zweite Stirnseite (20) mindestens eine Auskoppelfläche (12) aufweist, sowie mindestens einer Lichtquelle (8), deren Licht in die mindestens eine Einkoppelfläche (11) einleitbar ist, während das aus der Auskoppelfläche (12) austretende Licht der Beleuchtung des Zeigers (21) dient, **dadurch gekennzeichnet, dass** das Lichtleitelement (1) mehrere Ein- (11) sowie Auskoppelflächen (12) aufweist, wobei die Auskoppelflächen (12) derart ausgebildet sind, dass sie lediglich Lichtstrahlen durchlassen, deren Abstrahlwinkel zur Senkrechten unterhalb eines Grenzwertes liegt, während Lichtstrahlen, deren Abstrahlwinkel zur Senkrechten oberhalb des Grenzwertes liegt, einer Totalreflexion unterworfen werden.

2. Optische Anordnung nach Anspruch 1, **dadurch gekennzeichnet, dass** der Grenzwert des Abstrahlwinkels ca. 30° beträgt.

3. Optische Anordnung nach Anspruch 1 oder 2, **dadurch gekennzeichnet, dass** die Auskoppelflächen (12) nach dem Prinzip einer "Solf-Struktur" ausgebildet sind.

4. Optische Anordnung nach einem der Ansprüche 1 bis 3, **dadurch gekennzeichnet, dass** die Auskoppelflächen (12) am Bund (25) des Lichtleitelementes (1) ausgebildet und durch nahezu parallel zueinander verlaufende radiale Riefen gebildet sind.

5. Optische Anordnung nach einem der Ansprüche 1 bis 4, **dadurch gekennzeichnet, dass** die Auskoppelflächen (12) durch Bereiche (14) mit einer aufgerauten Oberfläche voneinander getrennt sind.

6. Optische Anordnung nach einem der Ansprüche 1 bis 5, **dadurch gekennzeichnet, dass** die Einkoppelflächen (11) durch in axialer Richtung des Lichtleitelementes (1) ausgeführte Aussparungen gebildet sind.

7. Optische Anordnung nach Anspruch 6, **dadurch gekennzeichnet, dass** die Einkoppelflächen (11) als Zerstreuungslinsen ausgeführt sind.

8. Optische Anordnung nach einem der Ansprüche 1 bis 7, **dadurch gekennzeichnet, dass** die mindestens eine Lichtquelle, durch eine Leuchtdiode (8) gebildet ist.

9. Optische Anordnung nach Anspruch 1, **dadurch gekennzeichnet, dass** sie als Teil eines Zeigerinstruments ausgestaltet ist, insbesondere für ein Kraftfahrzeug, mit einem um eine Drehachse drehbaren Trägerkörper, an dem ein in einer Anzeige sichtbarer Zeiger (21) vorgesehen ist, der außerhalb der Drehachse gelagert ist, **dadurch gekennzeichnet, dass** der Zeiger (21) und/oder der Trägerkörper lichtleitend ausgebildet ist und eine Einkoppelfläche aufweist, in die das aus einem Lichtleitelement (1) austretende Licht einleitbar ist.

## Claims

1. Optical arrangement, in particular for passively illuminating a pointer (21) of a pointer instrument, comprising an annular light-guide element (1), the first end face (10) of which has at least one coupling-in surface (11) and the second end face (20) of which has at least one coupling-out surface (12), and at least one light source (8), the light from which can be guided into the at least one coupling-in surface (11), while the light exiting the coupling-out surface (12) serves for illuminating the pointer (21), **characterized in that** the light-guide element (1) has a plurality of coupling-in (11) and coupling-out surfaces (12), wherein the coupling-out surfaces (12) are configured such that they transmit only light beams having an emission angle, relative to the perpendicular, that is below a limit value, while light beams having an emission angle, relative to the perpendicular, that is above the limit value undergo total internal reflection.

2. Optical arrangement according to Claim 1, **characterized in that** the limit value of the emission angle is approximately 30°.

3. Optical arrangement according to Claim 1 or 2, **characterized in that** the coupling-out surfaces (12) are constructed based on the principle of a "Solf structure".

4. Optical arrangement according to one of Claims 1 to 3, **characterized in that** the coupling-out surfaces (12) are formed at the collar (25) of the light-guide element (1) and are made up of radial grooves which extend nearly parallel to one another.

5. Optical arrangement according to one of Claims 1 to 4, **characterized in that** the coupling-out surfaces (12) are separated from one another by regions (14) having a roughened surface.

6. Optical arrangement according to one of Claims 1 to 5, **characterized in that** the coupling-in surfaces (11) are made up of cutouts arranged in the axial direction of the light-guide element (1).

7. Optical arrangement according to Claim 6, **characterized in that** the coupling-in surfaces (11) are embodied as diverging lenses.

8. Optical arrangement according to one of Claims 1 to 7, **characterized in that** the at least one light source is made up of a light-emitting diode (8).

9. Optical arrangement according to Claim 1, **characterized in that** it is configured as part of a pointer instrument, in particular for a motor vehicle, having a carrier body which is rotatable about a rotation axis and on which a pointer (21) that is mounted outside the rotation axis and is visible in a display is provided, **characterized in that** the pointer (21) and/or the carrier body is configured such that it guides light and has a coupling-in surface into which the light exiting a light-guide element (1) can be guided.

## Revendications

1. Montage optique, notamment pour l'éclairage passif d'une aiguille (21) d'un instrument à aiguille, constitué d'un élément (1) de guidage de la lumière, dont le premier côté (10) frontal a au moins une surface (11) d'entrée et dont le deuxième côté (20) frontal a au moins une surface (12) de sortie, ainsi que d'au moins une source (8) lumineuse, dont la lumière peut entrer dans la au moins une surface (11) d'entrée, tandis que la lumière sortant de la surface (12) de sortie sert à l'éclairage de l'aiguille (21), **caractérisé en ce que** l'élément (1) de guidage de la lumière a plusieurs surfaces d'entrée (11), ainsi que de sortie (12), les surfaces (12) de sortie étant constituées de manière à laisser passer seulement des rayons lumineux, dont l'angle de rayonnement par rapport à la normale est inférieur à une valeur limite, tandis que des rayons lumineux, dont l'angle de rayonnement par rapport à la normale est supérieur à la valeur limite, sont soumis à une réflexion totale.

2. Montage optique suivant la revendication 1, **caractérisé en ce que** la valeur limite de l'angle de rayonnement est d'environ 30°.

3. Montage optique suivant la revendication 1 ou 2, **caractérisé en ce que** les surfaces (12) de sortie sont constituées suivant le principe d'une "solf-structure".

4. Montage optique suivant l'une des revendications 1 à 3, **caractérisé en ce que** les surfaces (12) de sortie sont constituées sur l'attache de l'élément (1) de guidage de la lumière et sont formées par des stries radiales s'étendant presque parallèlement entre elles.

5. Montage optique suivant l'une des revendications 1 à 4, **caractérisé en ce que** les surfaces (12) de sortie sont séparées les unes des autres par des zones (14) ayant une surface losangée.

6. Montage optique suivant l'une des revendications 1 à 5, **caractérisé en ce que** les surfaces (11) d'entrée sont formées par des évidements ménagés dans la direction axiale de l'élément (1) de guidage de la lumière.

7. Montage optique suivant la revendication 6, **caractérisé en ce que** les surfaces (11) d'entrée sont réalisées sous la forme de lentilles divergentes.

8. Montage optique suivant l'une des revendications 1 à 7, **caractérisé en ce que** la au moins une source lumineuse est formée par une diode (8) électroluminescente.

9. Montage optique suivant la revendication 1, **caractérisé en ce qu'**il est conformé en une partie d'un instrument à aiguille, notamment pour un véhicule automobile, ayant un corps de support- qui peut tourner autour d'un axe de rotation et sur lequel est prévue une aiguille (21) visible dans un affichage, aiguille qui est montée à l'extérieur de l'axe de rotation, **caractérisé en ce que** l'aiguille (21) et/ou le corps de support est constitué en conducteur de la lumière et a une surface d'entrée, dans laquelle peut entrer de la lumière sortant d'un élément (1) de guidage de la lumière.
